(19) Europäisches Patentamt
European Patent Office
Office européen des brevets

(11) **EP 1 828 802 B1**

(12) **FASCICULE DE BREVET EUROPEEN**

(45) Date de publication et mention
de la délivrance du brevet:
**04.04.2012 Bulletin 2012/14**

(21) Numéro de dépôt: **05825273.5**

(22) Date de dépôt: **12.12.2005**

(51) Int Cl.:
***G01S 5/18*** (2006.01)

(86) Numéro de dépôt international:
**PCT/EP2005/056671**

(87) Numéro de publication internationale:
**WO 2006/067058 (29.06.2006 Gazette 2006/26)**

(54) **DISPOSITIF DE DETERMINATION AUTONOME DES COORDONNEES GEOGRAPHIQUES ABSOLUES D'UN MOBILE EVOLUANT EN IMMERSION**

EINRICHTUNG ZUR AUTONOMEN BESTIMMUNG ABSOLUTER GEOGRAPHISCHER KOORDINATEN EINER SICH IN BEZUG AUF IMMERSION ÄNDERNDEN MOBILEN EINRICHTUNG

DEVICE FOR AUTONOMOUSLY DETERMINING ABSOLUTE GEOGRAPHIC COORDINATES OF A MOBILE CHANGING WITH REGARD TO IMMERSION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **23.12.2004 FR 0413835**

(43) Date de publication de la demande:
**05.09.2007 Bulletin 2007/36**

(73) Titulaire: **THALES**
**92200 Neuilly sur Seine (FR)**

(72) Inventeur: **BRIZARD, Thierry**
**F-91340 Ollainville (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A-02/10793     US-A1- 2004 068 371**

• **PATENT ABSTRACTS OF JAPAN vol. 2003, no. 11, 5 novembre 2003 (2003-11-05) & JP 2003 215230 A (YOSHITANI MASAO; SAWAI SADAO; OGAWA YASUYUKI; WAKAO ATSUNOBU; KOMIZU M), 30 juillet 2003 (2003-07-30)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention s'applique aux mobiles opérant en immersion et dont l'activité nécessite de connaître leur position géographique absolue (longitude, latitude, altitude). C'est en particulier le cas des mobiles effectuant des opérations de relevé de terrain, des fouilles ou plus généralement des opérations d'exploration. Par mobile, on entend aussi bien un plongeur autonome, un véhicule habité ou encore un engin automatisé.

Il existe sur le marché des systèmes de positionnement "de surface" permettant de connaître les coordonnées absolues (longitude, latitude, altitude) en n'importe quel point de la surface ou de l'atmosphère terrestre. Les systèmes de dernière génération offrent un repérage réalisé par un réseau de satellites en orbites géostationnaires émettant des signaux hyperfréquence. Un mobile évoluant sur la surface ou dans l'atmosphère terrestre et équipé d'un dispositif adéquat, peut décoder lesdits signaux et en extraire ses propres coordonnées absolues, en longitude, latitude et altitude, par exemple. Parmi ces systèmes de positionnement, on peut citer, par exemple, le Global Positioning System (GPS) Américain ou le futur système européen Galileo.

Les systèmes commercialisés aujourd'hui donnent à chacun la possibilité de déterminer une position géographique absolue avec une précision suffisante pour la plupart des usages, moyennant l'achat d'un dispositif bon marché et peu encombrant.

En revanche, comme le principe de fonctionnement de ces systèmes est fondé sur l'utilisation d'ondes hyperfréquences, ils ne répondent pas au besoin des mobiles évoluant en immersion au-delà d'une profondeur d'un mètre.

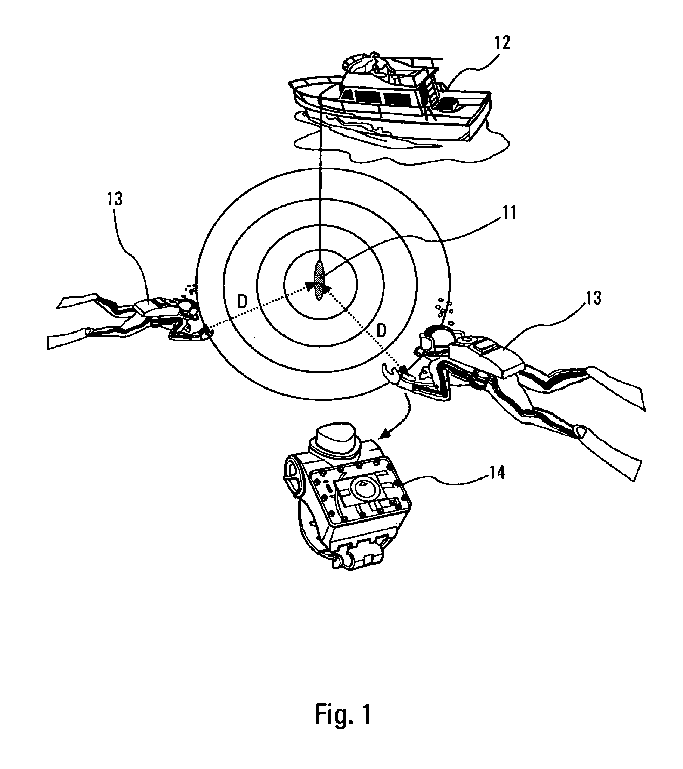

Indépendamment des systèmes de positionnement "de surface"décrits ci dessus, il existe sur le marché des systèmes de positionnement permettant à un mobile en immersion de connaître sa position relativement à un point donné, généralement marqué par une balise. Ces systèmes utilisent la propagation d'ondes acoustiques et fonctionnent selon le principe connu du "homing". Selon ce principe, illustré par la figure 1, chaque mobile (dans cette illustration, des plongeurs) est équipé d'un dispositif lui permettant de connaître à tout moment la distance D qui le sépare de la balise et le gisement θ dans lequel il situe ladite balise par rapport à son vecteur vitesse. La balise peut, par exemple, se trouver immergée depuis une embarcation ; elle constitue alors un point fixe coïncidant avec l'endroit d'où est parti le mobile en évolution.

Les dispositifs les plus performants pouvant équiper les mobiles en immersion sont pourvus d'une antenne acoustique omnidirectionnelle, permettant de déterminer le gisement θ d'une onde acoustique incidente à tout moment. Un tel dispositif développé pour la plongée de loisir est notamment décrit dans la demande internationale PCT/IB01/01361déposé par la société XIOS S.A. et publié sous la référence WO 02/10793.

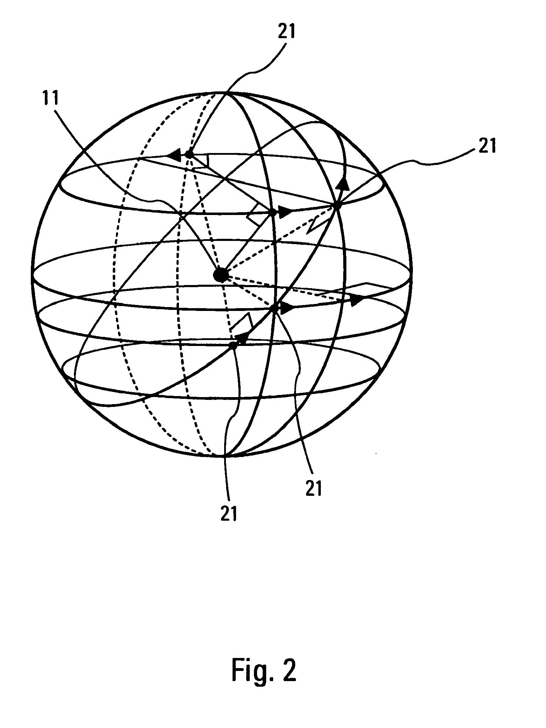

Avec un système de positionnement fonctionnant selon le principe du "homing", le mobile ne connaît sa position que relativement à la balise et, dans la mesure où ledit mobile évolue dans les 3 axes de l'espace, les informations de distance D et de gisement θ, fournies par le dispositif, sont par nature ambiguës : elles permettent seulement de positionner le mobile sur une sphère de diamètre D centrée sur la balise, comme le montre la figure 2.

Ces systèmes de positionnement par "homing" ne répondent donc pas au besoin qu'un mobile immergé peut avoir de connaître sa position géographique absolue, à l'occasion, par exemple, de missions sous-marines d'exploration, de fouilles archéologiques ou de campagnes de prospection. Pour répondre à ce besoin, on pourrait envisager un dispositif compatible, d'une part, d'un système de positionnement "de surface" de type GPS et d'autre part, d'un système de positionnement par "homing" tel que décrit ci dessus qui fonctionnerait de la façon suivante :

■ Avant l'immersion du mobile, le dispositif pourrait déterminer la position géographique absolue de la balise qui matérialise le point de départ de l'immersion dudit mobile en utilisant, par exemple le GPS, et mémoriser ladite position.

■ Durant l'immersion, le dispositif pourrait déterminer la position géographique absolue du mobile en combinant la position mémorisée du point de départ avec la position relative dudit mobile par rapport à la balise, fournie en permanence par le système de positionnement par "homing".

Cependant, cette détermination sera entachée de l'ambiguïté sphérique apportée par la localisation par "homing".

Toujours pour répondre au besoin d'un mobile immergé de connaître sa position géographique absolue, une solution consiste pour ledit mobile d'estimer sa profondeur, de faire surface en suivant une trajectoire de remontée parfaitement verticale et de déterminer la position géographique absolue au point de surface au moyen, par exemple, des informations GPS. Une telle solution, outre son coté fastidieux et peu applicable si le mobile est un plongeur, suppose que ledit mobile puisse contrôler sa dérive lors de la remontée vers la surface. Sans quoi, la mesure réalisée reste entachée d'incertitude.

Il est par ailleurs connu du document de brevet japonais, JP 2003-215230, un dispositif permettant à un véhicule sous-marin évoluant en immersion de déterminer périodiquement sa position géographique sans avoir à remonter à la surface. Le dispositif présenté est cependant un dispositif actif qui échange des signaux acoustiques porteurs d'informations avec une balise acoustique. Sa mise en oeuvre nécessite par ailleurs l'utilisation d'une balise sophistiquée comportant des moyens, de type GPS, lui permettant de déterminer sa position géographique ainsi que des moyens d'émission acoustiques capable de transmettre des signaux complexes porteur d'information et de réaliser une émission directive tournante.

Contrairement au dispositif décrit dans le document cité précédemment, l'invention propose, pour répondre au besoin, un dispositif utilisant une balise simple, qui permet à un mobile en immersion de calculer à tout instant, de façon autonome, la position géographique absolue (longitude, latitude et altitude) du point où il se trouve.

A cet effet, le dispositif selon l'invention associe :

■ Des moyens de « de surface »,
■ Des moyens de positionnement sous-marins par "homing",
■ Des moyens de calcul,
■ Des moyens de connaissance de l'environnement du mobile nécessaires, entre autres, à la levée de l'ambiguïté sphérique attachée aux moyens de positionnement sous marins par "homing".

Selon l'invention, ces moyens coopèrent pour fournir aux moyens de calculs embarqués (31) les informations nécessaires pour calculer les évolutions de latitude, de longitude et de profondeur par rapport à une position d'origine dont les coordonnées géographiques absolues sont connues

Dans un mode de réalisation préféré, décrit à titre d'exemple, les moyens de connaissance de l'environnement du mobile comportent au moins trois senseurs :

■ De direction fixe dans l'espace,
■ D'inclinaison du mobile immergé par rapport à un plan horizontal,
■ De profondeur d'immersion du mobile,

On pourrait avantageusement complémenter ces trois senseurs par un senseur de température et un senseur de salinité du milieu où le mobile est immergé.

Le dispositif selon l'invention présente l'avantage de permettre au mobile en immersion de déterminer lui-même sa propre position géographique absolue. Au delà de la simple balise acoustique, achetée par exemple dans le commerce et marquant le point de départ de l'immersion du mobile, le dispositif selon l'invention ne nécessite le déploiement d'aucuns moyens de communication ou de soutien propres, que ce soit en surface ou en immersion.

Le dispositif selon l'invention établira la trajectographie du mobile en immersion grâce à ses moyens autonomes lui permettant de calculer en permanence la position géographique absolue dudit mobile. La trajectoire établie pourra être superposée à une carte en deux ou trois dimensions du milieu où évolue le mobile.

Afin d'augmenter la précision du positionnement par "homing", les informations de température et de salinité pourront être avantageusement exploitées par le dispositif selon l'invention pour affiner ses paramètres de propagation acoustique.

D'autres caractéristiques et avantages apparaîtront au travers de la description qui suit, description accompagnée des figures 1 à 4 qui représentent :

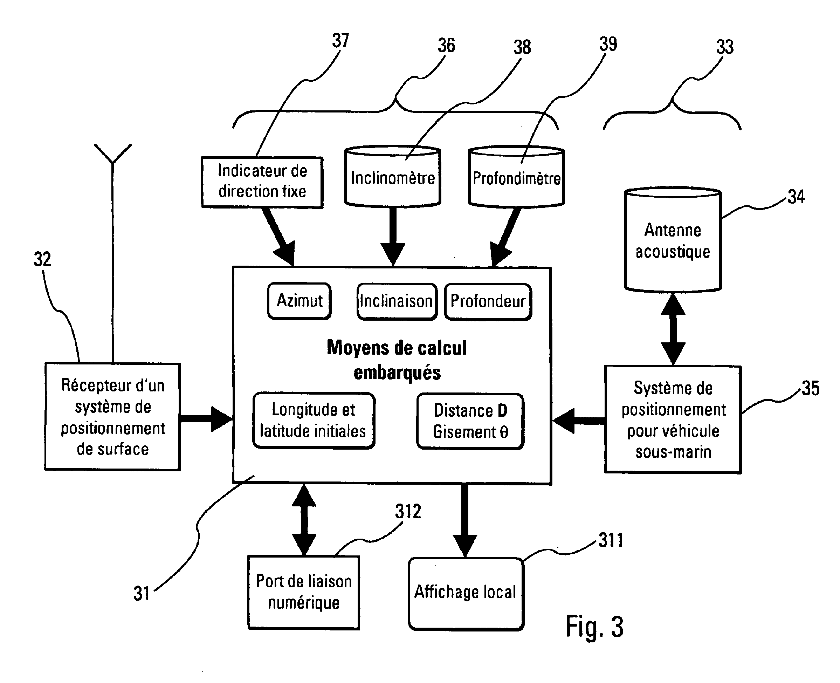

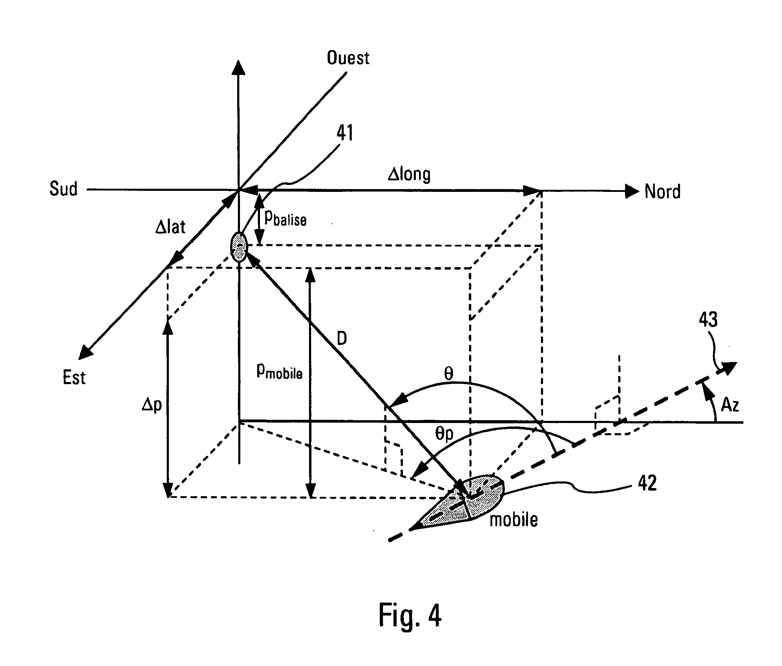

■ La figure 1, une illustration du principe de positionnement par "homing",
■ La figure 2, une illustration de l'ambiguïté sphérique inhérente aux systèmes de positionnement par "homing",
■ La figure 3, un synoptique de principe présentant les différents éléments du dispositif selon l'invention dans une forme de réalisation préférée,
■ La figure 4, l'illustration du principe de calcul mis en oeuvre par le dispositif selon l'invention, permettant au mobile de déterminer sa position géographique absolue.

Comme il a été dit précédemment, un procédé de localisation couramment utilisé par des mobiles en immersion est le procédé de "homing", illustré par la figure 1. Ce procédé permet à des mobiles en immersion de connaître approximativement leur position par rapport à une balise 11 immergée en un point fixe et émettant un signal acoustique répétitif de période précise. Cette balise peut, par exemple, être située à l'aplomb d'une embarcation 12 utilisée pour le largage de plongeurs 13. Selon ce procédé, le mobile est équipé d'un dispositif récepteur acoustique 14 muni d'une antenne directive captant les signaux de la balise. Le récepteur entretient également une horloge interne synchronisée avec les émissions périodiques de la balise 11 afin de pouvoir calculer la distance qui le sépare de ladite balise par la mesure du temps de parcours du signal entre l'émetteur et le récepteur. Muni d'un tel équipement, le mobile peut déterminer à la fois la distance D qui le sépare de la balise 11 et le gisement $\theta$ entre son vecteur vitesse et la direction de la balise. Il est ainsi capable à tout moment de retourner à son point de départ. Ce procédé de "homing" présente l'avantage d'être simple à mettre en oeuvre et de nécessiter, pour le mobile, l'emploi d'un matériel relativement peu coûteux. Il est donc par exemple particulièrement adapté aux plongeurs autonomes désireux de pouvoir retrouver sans problème un point de départ dont ils ne peuvent par ailleurs pas trop s'éloigner pour des raisons d'autonomie. En revanche, comme il a été dit précédemment, ce procédé présente des performances limitées en matière de localisation géographique absolue. A un instant donné, l'information de position calculée permet au mobile de seulement savoir qu'il se trouve quelque part sur la sphère centrée sur la balise et dont le rayon est égal à la distance D mesurée. C'est pourquoi on parle d'ambiguïté sphérique.

Cette ambiguïté sphérique est illustrée par la figure 2. Sur cette figure sont représentés à titre d'exemple des mobiles 21 se déplaçant le long de cercles de rayon D centrés sur la balise 11. On peut constater à partir de cette figure que pour tous les mobiles représentés les informations de distance et de gisement seront identiques, le gisement étant chaque fois égal à 90° et la distance égale à D.

Cette ambiguïté rend donc les dispositifs basés sur le procédé de "homing" peu utilisables dans les cas où la connaissance de la position géographique absolue du mobile est nécessaire.

Le dispositif selon l'invention est illustré par le synoptique de la figure 3. Ce dispositif, associé à une balise acoustique émettrice, a pour fonction de lever l'ambiguïté sphérique attachée aux dispositifs de l'art antérieur par une combinaison de moyens associés à des moyens de calcul embarqués 31. A cet effet il comporte en particulier :

■ Des moyens de positionnement "de surface"32 permettant de connaître les coordonnées absolues (longitude, latitude et altitude) sur la surface terrestre, ces moyens pouvant par exemple consister en un récepteur GPS ou GALILEO,

■ Des moyens de positionnement sous-marins par "homing" 33 comportant notamment une antenne acoustique directive 34 associée à des moyens 35 permettant de déterminer la distance et le gisement dans lequel se situe la balise,

■ Un ensemble de senseurs 36 permettant d'obtenir les informations nécessaires pour lever l'ambiguïté sphérique proprement dite.

Les moyens de calcul 31 recueillent l'ensemble des informations provenant des moyens 32, 33 et 36 et les utilisent pour déterminer les coordonnées géographiques absolues du mobile en immersion.

Dans une forme préférée de réalisation l'ensemble 36 comporte en particulier trois senseurs :

■ Un premier senseur 37 consistant en un indicateur de direction fixe dans l'espace, par exemple un compas magnétique de type "fluxgate 2D", mécaniquement solidaire de l'antenne acoustique 34 du système de navigation 33 et positionné dans le même plan que cette dernière. En position horizontale, ce compas délivre aux moyens de calcul embarqués 31, la valeur d'azimut entre le nord magnétique et le vecteur vitesse du mobile.

■ Un deuxième senseur consistant en un inclinomètre 38 qui permet en particulier de maintenir l'antenne acoustique 34 et le compas magnétique 37 dans un plan sensiblement horizontal.

■ Un troisième senseur consistant en un profondimètre 39, construit par exemple autour d'un capteur de pression, délivrant aux moyens de calcul embarqués 31 la valeur de la profondeur d'immersion du mobile.

En fonction du mode de réalisation choisi, et du type de mobile devant être équipé du dispositif selon l'invention, le deuxième senseur 38 peut en outre remplir d'autres fonctions telles que le pilotage d'un dispositif mécanique destiné à maintenir automatiquement l'antenne acoustique et le compas magnétique dans un plan sensiblement horizontal. Dans le cas ou le mobile est un plongeur, le senseur 38 peut consister, par exemple, en un simple niveau à bulle.

Ainsi, à partir des informations délivrées par les différents moyens 32, 33 et 36 et des coordonnées géographiques absolues initiales, déterminées au moment de la mise à l'eau du mobile, les moyens de calcul embarqués 31 sont capables de déterminer à tout instant les coordonnées géographiques absolues du mobile en déplacement.

La figure 4 illustre le principe du calcul réalisé par le dispositif selon l'invention pour déterminer et actualiser les coordonnées d'un mobile en immersion. Ces coordonnées sont données par les formules suivantes:

$$\Delta \text{Lat.} = (60 / 1852) \cdot [D \cdot \cos Az \cdot \cos\theta - \sin Az \cdot \sqrt{(D^2 \cdot \sin^2\theta - \Delta p^2)}] \quad [1]$$

$$\Delta long. = (60/1852) \cdot [\cos Az \cdot \sqrt{(D^2 \cdot \sin^2\theta - \Delta p^2)} + D \cdot \sin Az \cdot \cos\theta] \quad [2]$$

Dans les relations [1] et [2], $\Delta$long. et $\Delta$lat. représentent respectivement la variation de latitude et la longitude, au cours du déplacement du mobile, exprimées en secondes.

$\theta$ représente l'angle de gisement de la balise acoustique, tel qu'il est déterminé par le système de navigation 33, l'antenne acoustique 34 étant maintenue dans un plan horizontal grâce au senseur d'inclinaison 38.

Az représente la valeur de l'azimut donnée par l'indicateur de direction fixe 37 ce senseur étant normalement maintenu dans un plan horizontal.

$\Delta$p représente la différence de profondeur d'immersion entre le mobile 42 et la balise 41, déterminée à partir des informations fournies par le profondimètre 39.

D représentent quant à elle la distance de la balise 41 au mobile 42.

Les expressions [1] et [2] sont établie de manière connue à partir des relations suivantes [3] et [4], donnant l'expression en mètres de $\Delta$lat. et $\Delta$long.:

$$\Delta lat. = \cos(180° - \theta_p - Az) \cdot \sqrt{(D^2 - \Delta_p^2)} \qquad [3]$$

$$\Delta long. = \sin(180° - \theta_p - Az) \cdot \sqrt{(D^2 - \Delta_p^2)} \qquad [4]$$

avec

$$\cos\theta_p = \cos\theta \cdot \frac{D}{\sqrt{D^2 - \Delta_p^2}} \quad \text{et} \quad \sin\theta_p = 1 - \cos^2\theta \cdot \frac{D^2}{\sqrt{D^2 - \Delta_p^2}}$$

$\theta_p$ représente la projection du gisement $\theta$, donné par le système de positionnement relatif, dans le plan horizontal.

La présence dans les expressions [1] à [4] du terme Az correspondant à l'azimut suivi par le mobile, c'est à dire à l'écart angulaire existant entre sa direction de déplacement et la direction du nord, permet avantageusement de déterminer de manière absolument non ambiguë les grandeurs $\Delta$lat. et $\Delta$long. Par suite, connaissant $\Delta$lat. et $\Delta$long. In est alors possible de déterminer sans ambiguïté, à partir des coordonnées géographiques initiales lat$_{ini}$ et long$_{ini}$, les coordonnées absolues du mobile à tout instant.

Les coordonnées géographiques absolues ainsi calculées pourront être visualisées en local, au niveau du dispositif, sur un afficheur 311 et/ou transmises sous forme numérique à une unité de traitement déportée, par le biais du port de communication 312.

L'afficheur 311 peut ainsi par exemple afficher simultanément l'azimut de la balise, la distance de la balise par rapport au mobile ainsi que les coordonnées géographiques absolues (longitude, latitude et altitude) du point où se situe le mobile à l'instant considéré.

Comme il a été dit précédemment, le dispositif selon l'invention est destiné à fonctionner avec une balise acoustique sur laquelle ses moyens 33 de positionnement par "homing" sont synchronisés. Par ailleurs, le calcul des coordonnées absolues nécessite que le dispositif puisse au moins à un instant donné, acquérir des coordonnées géographiques absolues "de surface"au moyen du récepteur 32. L'exploitation du dispositif selon l'invention par un mobile en immersion suit donc un mode opératoire déterminé comportant plusieurs phases :

- ■ Une phase de préparation de l'immersion,
- ■ Une phase d'initialisation des senseurs,

■ Une phase de fonctionnement en immersion,

■ Une phase de d'évolution en surface

Les phases de préparation et d'initialisation sont des phases préliminaires indispensables pour le fonctionnement en immersion. Les phases de fonctionnement en immersion et d'évolution en surface peuvent être alternées jusqu'à la remontée définitive du mobile à la surface.

Durant la phase de préparation, le dispositif selon l'invention est mis en marche et entre en fonctionnement "de surface"où il indique les coordonnées géographiques absolues grâce à ses seuls moyens 32 de positionnement « de surface ». Les informations fournies par l'afficheur 311 se résument à la longitude, latitude et altitude du lieu où se trouve l'embarcation associée au mobile. Durant cette phase, le mobile peut être soit en surface, soit encore sur l'embarcation de largage.

La phase d'initialisation consiste principalement à synchroniser les moyens acoustiques de navigation 33 du mobile 42 avec la balise acoustique 41. Pour ce faire, l'émetteur acoustique de la balise 41 est allumé et la balise est immergée sous l'embarcation, accrochée à un bout ou encore au bas de la ligne d'ancre. La profondeur d'immersion est généralement de quelques mètres, cinq mètres par exemple.

Pour synchroniser le récepteur des moyens 32 de positionnement par "homing" avec l'émetteur acoustique de la balise 41, le mobile, un plongeur par exemple, s'immerge. Cette immersion est aussitôt détectée par le dispositif du fait de la brusque variation des indications de son profondimètre 39, et enclenche automatiquement la séquence de synchronisation.

Le mobile rallie la position de la balise 41 afin que le récepteur acoustique de ses moyens 32 soit mis à proximité de ladite balise, typiquement à une distance inférieure au mètre. Le signal acoustique cohérent et périodique émis par la balise 41 est ainsi rapidement détecté par le dispositif selon l'invention du fait de son fort niveau, qui effectue alors sa synchronisation.

Parallèlement à la synchronisation, la phase d'initialisation comporte la mémorisation de la position géographique absolue de la balise comme point d'origine. Cette position correspond sensiblement aux dernières coordonnées géographiques "de surface"relevées par les moyens 32 du dispositif avant l'immersion du mobile.

A ce stade le dispositif est complètement initialisé et opérationnel.

L'initialisation étant achevée, la phase de fonctionnement en immersion peut être engagée. Le mobile peut alors évoluer librement. Le dispositif selon l'invention calcule à l'aide de ses différents capteurs la position géographique absolue du mobile à tout instant. Le calcul effectué est celui décrit précédemment. La position actuelle du mobile est donnée par la position initiale mémorisée et les valeurs de $\Delta$long. et $\Delta$lat. calculées à l'aide des formules [3] et [4].

Lorsque au cours de son parcourt le mobile est amené à émerger temporairement ou définitivement et à évoluer en surface, le dispositif selon l'invention peut à nouveau utiliser ses moyens de positionnement "de surface"32 (GPS ou GALILEO) pour acquérir sa position et comparer les nouvelles coordonnées "de surface"acquises aux coordonnées absolues calculées pendant l'immersion. La vérification permet au dispositif, en cas d'écart trop important, d'effectuer un recalage automatique des coordonnées calculées avant le retour en immersion. Durant la phase émergée, les moyens de "homing" 33 sont maintenus un certain temps en fonctionnement de façon à conserver leur synchronisation avec la balise et permettre un éventuel retour en immersion.

**Revendications**

**1.** Dispositif de détermination autonome de coordonnées géographiques absolues pour un mobile (42) en immersion, le dispositif comportant au moins :

- des moyens acoustiques (33) de positionnement par homing du mobile (42) configurés pour déterminer la position relative dudit mobile, en distance D et gisement θ, par rapportà une balise acoustique fixe (41), à partir du signal périodique omnidirectionnel émis par cette dernière, la balise matérialisant une position d'origine;
- des moyens de positionnement de surface (32), permettant au mobile (42), alors qu'il est émergé dans le voisinage proche de la balise, de déterminer et de mémoriser les coordonnées géographiques absolues de la balise, la position de la balise étant prise comme position d'origine du mobile;

**caractérisé en ce qu'**il comporte en outre un ensemble de senseurs (36) permettant au mobile de connaître sa profondeur d'évolution $\Delta$p, son horizontalité, et l'écart angulaire Az entre son vecteur vitesse (43) et une direction fixe ; ces moyens coopérant pour fournir à des moyens de calculs embarqués (31) les informations nécessaires pour calculer périodiquement les évolutions de latitude, de longitude et d'altitude par rapport à la position d'origine; les écarts de latitude $\Delta$lat. et de longitude $\Delta$long. étant déterminés, en secondes d'angle, à partir des relations suivantes :

$$\Delta\text{Lat.} = (60 / 1852) \cdot [D \cdot \cos Az \cdot \cos\theta - \sin Az \cdot \sqrt{(D^2 \cdot \sin^2\theta - \Delta p^2)}]$$

et

$$\Delta\text{long.} = (60/1852) \cdot [\cos Az \cdot \sqrt{(D^2 \cdot \sin^2\theta - \Delta p^2)} + D \cdot \sin Az \cdot \cos\theta] \ ;$$

l'angle θ étant déterminé alors que l'antenne acoustique (34) du système de navigation (33) est maintenue dans un plan horizontal.

2. Dispositif selon la revendication 1, **caractérisé en ce que** les moyens acoustiques de positionnement (33) comportent une antenne directive (34) et un récepteur synchronisé sur l'émetteur de la balise acoustique, ces moyens fournissant aux moyens de calcul (31) la distance D séparant le mobile de la balise et le gisement θ dans lequel se trouve la balise par rapport au vecteur vitesse du mobile.

3. Dispositif selon les revendications 1 ou 2, **caractérisé en ce que** les moyens de positionnement de surface (32) utilisent un système de positionnement par satellite pour déterminer la longitude, la latitude et l'altitude du mobile (42) lorsque ledit mobile est émergé.

4. Dispositif selon l'une quelconque des revendications précédentes, **caractérisé en ce que** l'ensemble de senseurs (36) comporte au moins un indicateur de direction fixe (37) de type compas magnétique, un inclinomètre (38) et un capteur de pression (39).

5. Dispositif selon l'une quelconque des revendications précédentes, **caractérisé en ce que** les moyens de calcul embarqués (31) comportent en outre un afficheur local (311) et un port de communication externe (312).

6. Procédé de mise en oeuvre du dispositif selon l'une des revendications précédentes, le procédé comportant une phase de préparation comportant la mise en marche du dispositif (42) et l'acquisition des coordonnées absolues du mobile à l'aide des moyens de positionnement de surface (32) ;
**caractérisé en ce qu'**il comporte en outre :

- une phase initialisation comportant au moins la synchronisation des moyens acoustiques de positionnement par homing (33) du dispositif avec l'émetteur acoustique d'une balise fixe (41), ainsi que le relevé et la mémorisation de la position géographique absolue de la balise à l'aïde des moyens de positionnement de surface (32) ; le dispositif étant positionné au voisinage proche de la balise durant cette phase ;
- une phase de fonctionnement en immersion durant laquelle les moyens de calculs embarqués (31) déterminent les évolutions de position géographique absolue du mobile par rapport à la position géographique mesurée dans la phase d'initialisation ; ces évolutions étant déterminées en calculant à tout instant les écarts de latitude Δlat. et de longitude Δlong.;
- une phase de fonctionnement en surface durant laquelle les moyens de positionnement de surface (32) effectuent de nouveau l'acquisition des coordonnées géographiques du mobile et effectuent, si nécessaire, un recalage de la position absolue, préalablement calculée durant l'immersion.

## Claims

1. A device for autonomously determining absolute geographic coordinates for a submerged mobile object (42), said device at least comprising:

- acoustic means (33) for positioning said mobile object (42) by homing, which means are configured to determine the relative position of said mobile object, in distance D and in bearing θ, relative to a fixed acoustic beacon (41), on the basis of the omnidirectional periodical signal emitted by said beacon, said beacon providing a source position;
- surface positioning means (32) which enable the mobile object (42), when it is emerged in close proximity of said beacon, to determine and to record the absolute geographic coordinates of said beacon, the position of said beacon being considered to be the source position of the mobile object;

**characterised in that** it further comprises a set of sensors (36) that enable said mobile object to know its depth of travel Δp, its horizontality and the angular deviation Az between its speed vector (43) and a fixed direction; these means cooperating so as to provide on-board calculation means (31) with the necessary information to periodically calculate the changes in latitude, longitude and altitude relative to the source position; the latitude Δlat. and longitude Δlong. deviations being determined, in angle seconds, from the following relations:

$$\Delta \text{Lat.} = (60 / 1852) \cdot [D \cdot \cos Az \cdot \cos\theta - \sin Az \cdot \sqrt{(D^2 \cdot \sin^2\theta - \Delta p^2)}]$$

and

$$\Delta \text{long.} = (60/1852) \cdot [\cos Az \cdot \sqrt{(D^2 \cdot \sin^2\theta - \Delta p^2)} + D \cdot \sin Az \cdot \cos\theta] \, ;$$

the angle θ being determined whilst the acoustic antenna (34) of the navigation system (33) is maintained in a horizontal plane.

2. The device according to claim 1, **characterised in that** the acoustic positioning means (33) comprise a directive antenna (34) and a receiver synchronised to the emitter of the acoustic beacon, said means providing the calculation means (31) with the distance D that separates the mobile object from the beacon and the bearing θ in which the beacon is found relative to the speed vector of the mobile object.

3. The device according to claim 1 or 2, **characterised in that** the surface positioning means (32) use a satellite positioning system to determine the longitude, the latitude and the altitude of the mobile object (42) when said mobile object is emerged.

4. The device according to any one of the preceding claims, **characterised in that** the set of sensors (36) comprises at least a fixed direction indicator (37) of the magnetic compass type, a bank indicator (38) and a pressure sensor (39).

5. The device according to any one of the preceding claims, **characterised in that** the on-board calculation means (31) further comprise a local display (311) and an external communication port (312).

6. A method for implementing the device according to any one of the preceding claims, said method comprising a preparation phase comprising the start-up of the device (42) and the acquisition of the absolute coordinates of the mobile object using surface positioning means (32); **characterised in that** it further comprises:

- an initialisation phase that comprises at least synchronising the acoustic means of positioning by homing (33) of the device with the acoustic emitter of a fixed beacon (41), as well as recording and memorising the absolute geographic position of the beacon using surface positioning means (32); the device being positioned in close proximity of the beacon during this phase;
- a submersed operating phase during which the on-board calculating means (31) determine the changes of the absolute geographic position of the mobile object relative to the geographic position that was measured during the initialisation phase; these changes being determined by calculating at any time the latitude Δlat. and longitude Δlong. deviations;
- a surface operating phase during which the surface positioning means (32) once again acquire the geographic coordinates of the mobile object and reset, if necessary, the absolute position that was previously calculated during the submersion phase.

**Patentansprüche**

1. Vorrichtung zum autonomen Ermitteln absoluter geografischer Koordinaten für ein eingetauchtes mobiles Objekt (42), wobei die Vorrichtung mindestens Folgendes umfasst:

- akustische Mittel (33) zum Positionieren des mobilen Objekts (42) durch Homing, die zum Ermitteln der relativen Position des mobilen Objekts in Bezug auf die Distanz D und den Peilwinkel θ, relativ zu einer festen akustischen Bake (41), auf der Basis des von der Bake ausgesendeten omnidirektionellen periodischen Signals konfiguriert sind, wobei die Bake eine Ursprungsposition bereitstellt;
- Oberflächenpositionierungsmittel (32), die es dem mobilen Objekt (42) ermöglichen, wenn es in unmittelbarer Nähe zu der Bake aufgetaucht ist, die absoluten geografischen Koordinanten der Bake zu ermitteln und zu speichern, wobei die Position der Bake als die Ursprungsposition des mobilen Objekts angesehen wird;

**dadurch gekennzeichnet, dass** sie ferner einen Satz Sensoren (36) umfasst, die es dem mobilen Objekt ermöglichen, seine Bewegungstiefe Δp, seine Horizontalität und den Winkelabstand Az zwischen seinem Geschwindigkeitsvektor (43) und einer festen Richtung zu kennen;

wobei diese Mittel so zusammenwirken, dass einem Bordrechenmittel (31) die nötigen Informationen gegeben werden, um die Änderungen von Breitengrad, Längengrad und Höhe in Bezug auf die Ursprungsposition periodisch zu berechnen;

wobei die Abstände von Breitengrad Δlat. und Längengrad Δlong. in Winkelsekunden anhand der folgenden Beziehungen ermittelt werden:

$$\Delta \text{Lat.} = (60 / 1852) \cdot [D \cdot \cos Az \cdot \cos\theta - \sin Az \cdot \sqrt{(D^2 \cdot \sin^2\theta - \Delta p^2)}]$$

und

$$\Delta \text{long.} = (60/1852) \cdot [\cos Az \cdot \sqrt{(D^2 \cdot \sin^2\theta - \Delta p^2)} + D \cdot \sin Az \cdot \cos\theta],$$

wobei der Winkel θ ermittelt wird, während die akustische Antenne (34) des Navigationssystems (33) in einer horizontalen Ebene gehalten wird.

2. Vorrichtung nach Anspruch 1, **dadurch gekennzeichnet, dass** die akustischen Positionierungsmittel (33) eine Richtungsantenne (34) und einen Empfänger umfassen, der auf den Sender der akustischen Bake synchronisiert ist, wobei diese Mittel dem Rechenmittel (31) die Distanz D zwischen dem mobilen Objekt und der Bake und den Peilwinkel θ liefern, in dem sich die Bake in Bezug auf den Geschwindigkeitsvektor des mobilen Objekts befindet.

3. Vorrichtung nach Anspruch 1 oder 2, **dadurch gekennzeichnet, dass** die Oberflächenpositionierungsmittel (32) ein Satellitenpositionierungssystem zum Ermitteln von Breitengrad, Längengrad und Höhe des mobilen Objekts (42) benutzen, wenn das mobile Objekt aufgetaucht ist.

4. Vorrichtung nach einem der vorherigen Ansprüche, **dadurch gekennzeichnet, dass** der Satz Sensoren (36) wenigstens einen Festrichtungsanzeiger (37) des Magnetkompasstyps, einen Querneigungsmesser (38) und einen Drucksensor (39) umfasst.

5. Vorrichtung nach einem der vorherigen Ansprüche, **dadurch gekennzeichnet, dass** die Bordrechenmittel (31) ferner ein lokales Display (311) und einen externen Kommunikationsport (312) umfassen.

6. Verfahren zum Implementieren der Vorrichtung nach einem der vorherigen Ansprüche, wobei das Verfahren eine Vorbereitungsphase beinhaltet, die den Start der Vorrichtung (42) und die Erfassung der absoluten Koordinaten des mobilen Objekts mit Oberflächenpositionierungsmitteln (32) umfasst;
**dadurch gekennzeichnet, dass** es ferner Folgendes beinhaltet:

- eine Initialisierungsphase, die wenigstens das Synchronisieren der akustischen Positionierungsmittel durch Homing (33) der Vorrichtung mit dem akustischen Sender einer festen Bake (41) sowie das Aufzeichnen und Speichern der absoluten geografischen Position der Bake mit Oberflächenpositionierungsmitteln (32) beinhaltet; wobei sich die Vorrichtung während dieser Phase in unmittelbarer Nähe zu der Bake befindet;

- eine Eintauchbetriebsphase, während der die Bordrechenmittel (31) die Änderungen der absoluten geografischen Position des mobilen Objekts in Bezug auf die in der Initialisierungsphase berechnete geografische Position ermitteln, wobei diese Änderungen durch Berechnen der Abstände von Breitengrad $\Delta$lat. und Längengrad $\Delta$long. zu einem beliebigen Zeitpunkt ermittelt werden;

- eine Oberflächenbetriebsphase, während der die Oberflächenpositionierungsmittel (32) nochmals die geografischen Koordinaten des mobilen Objekts erfassen und, falls notwendig, die absolute Position zurückstellen, die zuvor in der Eintauchphase berechnet wurde.

Fig. 1

Fig. 2

EP 1 828 802 B1

37  36  38  39  33

Indicateur de
direction fixe

Inclinomètre

Profondimètre

Antenne
acoustique

34

32

Récepteur d'un
système de
positionnement
de surface

Moyens de calcul
embarqués

Azimut  Inclinaison  Profondeur

Longitude et
latitude initiales

Distance **D**
Gisement θ

Système de
positionnement
pour véhicule
sous-marin

35

31

Port de liaison
numérique

312

Affichage local

311

Fig. 3

Fig. 4

EP 1 828 802 B1

**EP 1 828 802 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0210793 A

- JP 2003215230 A